# EUROPEAN PATENT APPLICATION

(11) **EP 1 767 405 A1**
(43) Date of publication of application: **28.03.2007**
(21) Application number: 06004104.3
(22) Date of filing: 01.03.2006
(51) Int. Cl.: B60R 13/04, B21H 8/02, B21B 1/22

(54) **Process for the realization of finished aesthetic components for the automotive with a carrier coated with polished or opaque aluminium**

(30) Priority: 23.09.2005 IT TV20050140
(71) Applicant: Plastal S.p.A., 33170 Pordenone (IT)
(72) Inventor: Longo, Ferruccio, 31015 Conegliano (TV) (IT); Herold, Hans-Peter, 31050 Ponzano Veneto (TV) (IT)
(74) Representative: Massa, Patrizia

(57) **Abstract**

Process for the realization of finished aesthetic components for the automotive, in which the operation schedule includes the following steps:
a) rolling of the aluminium sheet (1) from coil, by means of at least one rolling cylinder (2) on the surface of which the necessary lines (3) are obtained to give the desired brushed effect on the facade of the aluminium sheet, and in which said cylinder (2) provides areas (4) without said lines (3) being suitable to give the localised bright effect (10) with respect to the brushed surrounding area (100), said areas (4) being found by means of reference points (5);
b) execution of the lengthwise cutting (6) of the aluminium sheet into strips (101);
c) cutting of each strip (101) using the reference points (5);
d) cutting of the aluminium elements (102);
e) shaping of the aluminium elements (102);
f) anodising of the aluminium elements (102);
g) separation of the aluminium elements (102) and subsequent removal of the connecting tongues (106);
h) gluing or imposed injection of each element onto the corresponding plastic carrier.

## Description

This invention relates to a process for the realization of finished aesthetic components for the automotive with coating of the carrier in aluminium.

The invention is exclusively used in the sector of the automotive, and in particular in the realization of components in light material, with aesthetic-functional purposes.

### Domain of the Invention

The inside of the passenger compartment of a vehicle is characterised by the presence of numerous aesthetic components, which, in the coating of the same, contribute to allow more agreeable surroundings.

It is true, for example, of components that are applied to the dashboard, door panels, cover trims, parts of the steering-wheel, even to the gear lever area. In all these cases, usually the component is realized by means of the combination of two elements, respectively, on one side, a plastic carrier that obviously is shaped, to which carrier a coating is joined, consisting of a shaped aluminium sheet.

The choice to add an aluminium sheet to the plastic carrier, beyond a question of aesthetics, appears to be dictated by ecologic reasons, since aluminium is considered a material with eco-compatible properties.

Like steel, aluminium can also be obtained in the form of thin sheets of variable thickness. These, other than being widely used as panelling for facades in the construction of buildings, in the architectonic field and in window and door frames, can also be used in the realization of composite rolled-sections characterised by the presence of a heart in polymer covered by thin oxidized or varnished aluminium sheets. Lightweight, equipped with good mechanical properties, resistant to impact, vibration absorbent, sound absorbent and with good thermal insulating properties, these stratified materials find use in different sectors: from marine to aeronautic and transport, and so forth. It is possible to obtain innovative optical effects, or rather, a play of light and shade, of colours and reflections, by means of the use of light interference pigments, therefore shot effect, iridescent or holographic (3-dimensional) and not least by the working of the surface also 3-dimensional of the aluminium sheet.

It follows that the car industry shows a considerable interest towards these techniques, mainly for their versatility of use, their reliability and the reasonable approximate overall costs.

For example Audi, Alcoa and Lotus have already used combination techniques of elements of a different nature like aluminium with plastic, using mechanical combination techniques like, for example, riveting. For example it is well known that riveting is preferred with respect to spotwelding in the combination of Space Frame structures in aluminium, whereas not many available sources exist which concern the automotive application of blind rivets. However, in the application of these techniques to mass production some questions linked to the services in practice must still be examined more closely, in particular concerning fatigue, corrosion and crash behaviour.

In the aluminium industry, the rolling of aluminium, which does not deviate much from that of steel, begins with the plastic preheating of the plates and subsequent hot cogging in reversible installations. In relation to the needs of the finished product the plates are submitted to milling of the surfaces and sometimes also of the sides in order to eliminate the most segregated areas which suffered a "shell effect" in casting. The hot-rolling generally speaking begins on thicknesses between 400 and 600 mm and finishes with thicknesses less than 10 mm, on which cold-rolling is used. In the case of rolling to thicknesses of a small size the last step can be carried out twice. The two surfaces of the strip obtained in this way are distinguished such that the one in contact with the cylinders remains bright while the central one assumes a MATT-look characteristic that allows combination with other materials such as paper or plastic in many applications for packaging.

### Prior Art

At present, prior to connecting the aluminium element to the plastic carrier by means of glues, it is usual to give the same aluminium element, on the visible facade opposite the combining interface, a desired degree of finishing that can consist in the realization of colour effects, obtained by the brushing of a smooth surface and/or by means of raised shaping, therefore three dimensional of identification elements, therewith meaning names, symbols and others. In most cases, the raised shaping is localised in some areas of the aluminium element, mainly in areas where the aluminium appears with a bright or polished effect, while the surrounding area is processed differently, for example brushed achieving that typical colour effect of different shades.

In principle, said workings are performed starting with the thin sheets of aluminium, entirely polished, then from which to obtain, by cutting, the single elements to be applied to the carrier. The areas must therefore be identified on the sheets which correspond to the elements to be applied, where the original polished surface must be left, with respect to the surrounding area which in this case is brushed. In this hypothesis, the areas concerned, which are to remain in an original polished condition, are protected, either with removable ink, or alternatively with pre-cut adhesive tape. Here one proceeds with the brushing of the aluminium sheet, which can involve the whole surface of the sheet and however with the exclusion of the protected areas either with the removable ink or with the adhesive tape. The ink or the adhesive tape are then removed, each by means of conventional techniques, and thereafter one proceeds with the cutting of the single elements, the shaping, and the anodising.

The brushing treatment that can be carried out on the surrounding area of the surface that remains in a polished or bright condition determines the contrast between the brushed area and the bright area. Such contrast effect is obtained varying the degree of brushing, for example by means of a brushing where the lines (micro-engravings) are close together one to another or vice versa are spaced out. At the same time, one can vary the depth and the length of the micro-engravings, and carry out the brushing in a light or heavy way.

### Disadvantages

The abovementioned solutions highlight some disadvantages that the applicant intends to solve with this invention.

For example, the different steps that are necessary for the current working of aluminium elements require considerable working times, require staff, and in conclusion costs suffer, both for the use of materials like ink and tape, and also in relation to carrying out the different phases of treatment provided in the operation schedule.

Hence, the need for companies, particularly in the sector, to find alternative solutions, which are more effective with respect to the solutions in existence until now.

The aim of this invention is also to avoid the described disadvantages.

### Brief Description of the Invention

This and other aims are reached with this invention according to the characteristics mentioned in the included claims solving the arising problems by a process for the realization of finished aesthetic components for the automotive with coating of the plastic carrier in polished/opaque aluminium, for the inside of vehicles, in which the operation schedule includes the following steps:
a) rolling of the aluminium sheet from coil, by means of at least one rolling cylinder on the surface of which the necessary lines are obtained to give the desired brushed effect on the facade of the aluminium sheet, and in which said cylinder provides areas without said lines being suitable to give the localised bright effect with respect to the brushed surrounding area, said areas being found by means of reference points;
b) execution of the lengthwise cutting of the aluminium sheet into strips, each one containing brushed areas and bright areas;
c) cutting of each strip using the reference points;
d) cutting of the aluminium elements and if the elements are referable such as the parts of a complex series, they will be connected one to another by tongues and aligned;
e) shaping of the aluminium elements;
f) anodising of the aluminium elements;
g) separation of the aluminium elements and the subsequent removal of the connecting tongues;
h) gluing or imposed injection of each element onto the corresponding plastic carrier.

### Aims

In this way, by means of the considerable creative contribution the effect of which allowed to reach a considerable technical progress, some aims and advantages are achieved.

A first aim is understood to provide a process that substantially is without costs in the preparation of the aluminium sheets. In particular, the cost of the prepared aluminium sheet is comparable to the cost of a rolled sheet. The process in this invention does not involve significant economic investments for the brushing, to carry out the masking, for the pre-cutting of the adhesive tape. The only referable cost is in reference to the construction of the rolling cylinder/roll. There are no variable costs in reference to the brushing, there are no costs relative to the paper, to the tape and to the necessary staff to provide removal of these.

A second aim, is understood to obtain a lower cost of the parts. In particular, brushing is not provided, the phase of deposition/printing of ink is not provided, there is no washing phase.

A third aim is achieved with regard to the qualitative profile. In particular, different brushings are avoided in the execution of the process, the material is the same, and there are no fragments or working residues during the preparation of brightening and brushing. The resistance to scratches appears incremented, and the rolled surface presents a double resistance to brushing. There is moreover the possibility to obtain an alignment between the bright area and the adjacent brushed effect or opaque surface, with tolerances equal to about +/- 0.02 mm. for the mini set improving the combination between different pieces. Finally differences in the anodising colouring are not recognized.

In conclusion, it is made possible to obtain an eco-compatible component which provides at least greater comfort and effectiveness of use, with good technological content.

These and other advantages will appear from the detailed following description of a preferred solution with the aid of the enclosed schematic drawings, whose details of the execution are not to be considered limitative but only illustrative.

### Content of the Drawings

Figure 1, is a schematic view of the phase of rolling of the aluminium sheet.
Figure 2, is a plan-view of the processed aluminium sheet in Figure 1, in coil.
Figure 3, is a plan-view of the processed aluminium sheet in Figure 2, along which the lengthwise cutting into strips is made.
Figure 4, is a plan-view of the cutting phase with the references of the strips in Figure 3.
Figure 5 is a plan-view of the die cut element consisting of aligned parts of a complex element.
Finally, figure 6 is a plan-view of the moulding phase of the parts in Figure 5.

### Realization of the Invention

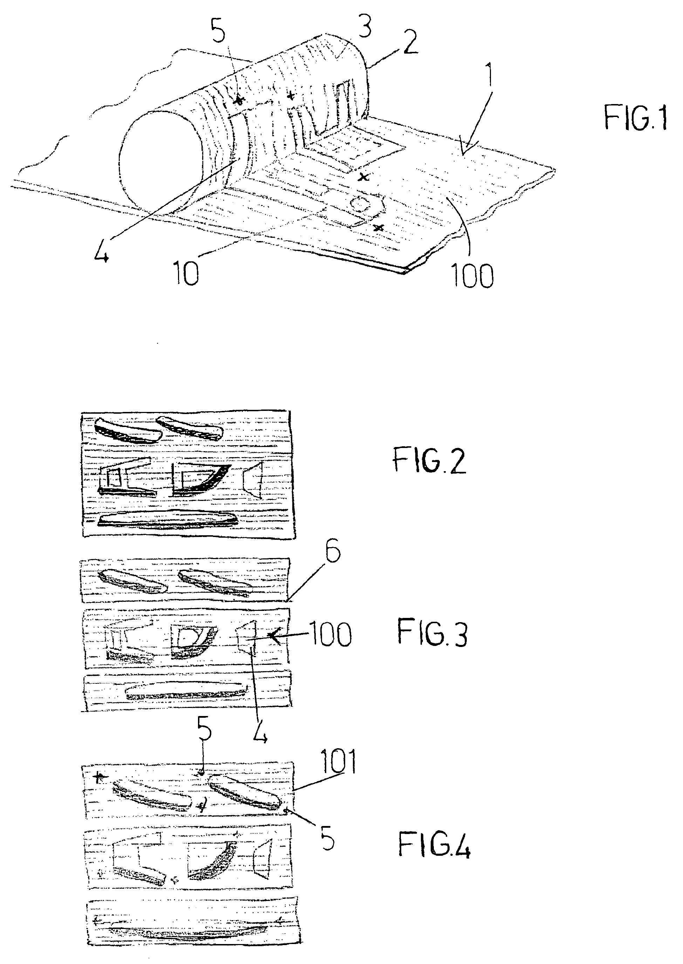

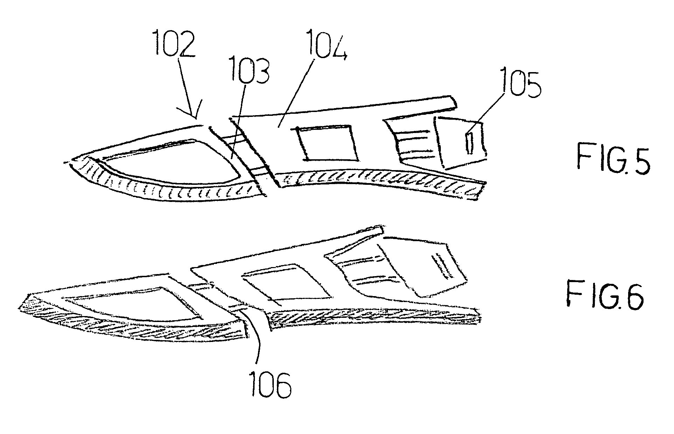

With reference also to Figures 1 and 6, it is observed that the process for the realization of finished aesthetic components for the automotive with coating of the carrier in aluminium, for inside vehicles, in which the operation schedule includes the following steps:
a) rolling of the aluminium sheet 1 from coil up to a maximum thickness of 1 mm, by means of at least one rolling cylinder/roll 2 on the surface of which are obtained the shapes 3 like lines necessary to confer on the facade of the aluminium sheet the desired brushed effect and in which said cylinder/roll 2, provides areas 4 without said shapes 3 being suitable to confer the bright effect 1 0 localised with respect to the brushed surrounding area 100, said areas 4 being found by means of the reference points 5;
b) execution of the lengthwise cutting 6 of the aluminium sheet into strips 101, on each of which there are brushed areas 100 and the bright areas 4;
c) cutting (see Figure 4, 5) of each strip 101 using the reference points 5;
d) cutting of the aluminium elements 102 and if the elements are referable such as parts 103, 104, 105 of a series complex, they will be connected one to another by tongues 106 and aligned;
e) shaping of the aluminium elements 10 2;
f) anodising of the aluminium elements 102;
g) separation of the aluminium elements 102 and subsequent removal of the connecting tongues 106;
h) gluing of each element onto the corresponding plastic carrier.

## Claims

1. Process for the realization of finished aesthetic components for the automotive with coating of the plastic carrier in polished/opaque aluminium, for the inside of vehicles, **characterised in that** the operation schedule includes the following steps:
a) rolling of the aluminium sheet 1 from coil up to a maximum thickness of 1 mm., by means of at least one rolling cylinder/roll 2 on the surface of which are obtained the shapes 3 like lines necessary to confer to the facade of the aluminium sheet the desired brushed effect, and in which said cylinder/roll 2, provides areas 4 without said shapes 3 being suitable to confer the bright effect 10 localised with respect to the brushed surrounding area 1 00, said areas 4 being found by means of reference points 5;
b) execution of the lengthwise cutting 6 of the aluminium sheet into strips 1 0 1 , on each of which there are brushed areas 1 00 and bright areas 4;
c) cutting (see Figure 4, 5) of each strip 101 using the reference points 5;
d) cutting of the aluminium elements 102 and in the case where the elements are referable such as parts 103, 104, 105 of a series complex, they will be connected one to another by tongues 106 and aligned;
e) shaping of the aluminium elements 102;
f) anodising of the aluminium elements 102;
g) separation of the aluminium elements 102 and subsequent removal of the connecting tongues 106;

2. Process for the realization of finished aesthetic components for the automotive with coating of the plastic carrier in polished/opaque aluminium, for the inside of vehicles, according to claim 1,
**characterised in that** the operation schedule includes the phase of gluing of each aluminium element onto the corresponding plastic material carrier.
